(19) Europäisches Patentamt

European Patent Office

Office européen des brevets

(11) **EP 1 485 269 B1**

(12) **EUROPÄISCHE PATENTSCHRIFT**

(45) Veröffentlichungstag und Bekanntmachung des Hinweises auf die Patenterteilung:
**16.11.2005 Patentblatt 2005/46**

(21) Anmeldenummer: 03714664.4

(22) Anmeldetag: **28.02.2003**

(51) Int Cl.⁷: **B60K 41/02**

(86) Internationale Anmeldenummer:
**PCT/DE2003/000647**

(87) Internationale Veröffentlichungsnummer:
**WO 2003/074313 (12.09.2003 Gazette 2003/37)**

(54) **DOPPELKUPPLUNGSGETRIEBE UND EIN VERFAHREN ZUM DURCHFÜHREN EINER HOCHSCHALTUNG VON EINEM ANFANGSGANG IN EINEN ZIELGANG BEI DEM DOPPELKUPPLUNGSGETRIEBE EINES FAHRZEUGES**

TWIN-CLUTCH GEARBOX AND METHOD FOR SHIFTING AN INITIAL GEAR UPWARDS INTO A TARGET GEAR IN THE TWIN-CLUTCH GEARBOX OF A MOTOR VEHICLE

BOITE DE VITESSES A DOUBLE EMBRAYAGE ET PROCEDE DE PASSAGE A UN RAPPORT DE VITESSE SUPERIEUR, D'UN RAPPORT DE DEPART A UN RAPPORT CIBLE, DANS LA BOITE DE VITESSES A DOUBLE EMBRAYAGE D'UN VEHICULE A MOTEUR

(84) Benannte Vertragsstaaten:
**AT BE BG CH CY CZ DE DK EE ES FI FR GB GR HU IE IT LI LU MC NL PT SE SI SK TR**

(30) Priorität: **07.03.2002 DE 10209917**

(43) Veröffentlichungstag der Anmeldung:
**15.12.2004 Patentblatt 2004/51**

(73) Patentinhaber: **LuK Lamellen und Kupplungsbau Beteiligungs KG**
**77815 Bühl (DE)**

(72) Erfinder: **BENZ, Jürgen**
**77704 Oberkirch (DE)**

(56) Entgegenhaltungen:
**WO-A-95/09741**

**Beschreibung**

Die vorliegende Erfindung betrifft ein Doppelkupplungsgetriebe und ein Verfahren zum Durchführen einer Hochschaltung von einem Anfangsgang in einen Zielgang bei dem Doppelkupplungsgetriebe eines Fahrzeuges.

Doppelkupplungsgetriebe, insbesondere Parallelschaltgetriebe, und Schaltstrategien für diese Getriebesysteme sind aus WO 95/09741 und aus der Fahrzeugtechnik bekannt. Es hat sich gezeigt, dass es insbesondere bei Parallelschaltgetrieben möglich ist, dass zu Beginn der Schaltung ein falscher Zielgang an der Zielwelle eingelegt ist. Für eine erfolgreiche Überschneidungsschaltung muß deshalb zunächst der Zielgang gewechselt werden. Insbesondere bei Zugrückschaltungen kann man diese Zeit nutzen, um den Motor auf die Zieldrehzahl zu beschleunigen. Bei Hochschaltungen wird das Fahrzeug jedoch so lange weiter beschleunigt, bis der Zielgang eingelegt ist. Insbesondere bei einer manuellen Auslösung des Schaltbefehls durch den Fahrer kann es dabei zu Komforteinbußen kommen.

Der Erfindung liegt deshalb die Aufgabe zugrunde, ein Doppelkupplungsgetriebe und ein Verfahren zum Durchführen einer Hochschaltung von einem Anfangsgang in einen Zielgang bei einem Doppelkupplungsgetriebe eines Fahrzeuges vorzuschlagen, mit denen möglich komfortable Schaltungen insbesondere bei falsch vorgewählten Zielgängen realisiert werden.

Diese Aufgabe wird zum einen durch ein erfindungsgemäßes Verfahren gelöst, bei dem das Motormoment $M_{Mot}$ des Fahrzeuges bei der Erkennung eines falsch vorgewählten Zielganges derart verändert wird, dass das Abtriebsmoment $M_{Abtrieb}$ reduziert wird, wenn der korrekte Zielgang eingelegt wird. Auf diese Weise kann der Fahrer durch die Verringerung des Motormoments eine Beschleunigung erfahren, die er mit dem angeforderten Fahrerwunschmoment $M_{FW}$ im Zielgang hat.

Im Rahmen einer Weiterbildung der Erfindung kann vorgesehen sein, dass das Motormoment $M_{Motor}$ beispielsweise zu Beginn einer Zug-Hochschaltung oder dergleichen verringert wird, bis der Zielgang eingelegt wird. Vorzugsweise kann danach das Motormoment $M_{Motor}$ auf ein gewünschtes Fahrerwunschmoment $M_{FW}$ erhöht werden, sodass die Schaltung nicht auf einem zu niedrigen Momentenniveau durchgeführt wird.

Gemäß einer Ausgestaltung der Erfindung kann das Motormoment ($M_{Motor}$) maximal auf ein reduziertes Motormoment ($M_{Red}$) verringert werden, welches bevorzugt nach folgender Gleichung bestimmt werden kann:

$$M_{Red} = M_{FW}\left(1 - \frac{i_{alt} - i_{neu}}{i_{alt}}\right)$$

Dabei sind mit $M_{FW}$ das Fahrerwunschmoment, mit $i_{alt}$ die Übersetzung des Anfangsganges und mit $i_{neu}$ die Übersetzung des Zielganges bezeichnet.

Erfindungsgemäß kann in einer ersten Phase bei der Erkennung eines falsch vorgewählten Zielganges das maximal zu reduzierende Motormoment $M_{Red}$ bestimmt werden. Dann wird geprüft, ob das Motormoment $M_{Mot}$ größer als das maximal zu reduzierende Motormoment $M_{Red}$ ist. Wenn dies der Fall ist, kann das Motormoment z. B. linear oder dergleichen auf ein reduziertes Motormoment $M_{Red}$ verringert werden, bis der Zielgang eingelegt ist. Sollte das reduzierte Motormoment $M_{Red}$ schon erreicht sein, kann abgewartet werden, bis der Zielgang eingelegt ist. Nach der Vorwahl des Zielganges ist die erste Phase beendet. Danach kann eine zweite Phase folgen, bei der eine Überschneidungsschaltung durchgeführt wird, wobei das Motormoment $M_{Mot}$ auf ein Fahrerwunschmoment $M_{FW}$ erhöht werden kann. Ein besonderer Vorteil dieser Schaltstrategie liegt darin, dass das Fahrzeug in der ersten Phase nicht mehr voll beschleunigt wird, sodass insbesondere bei Vollastschaltungen verhindert wird, dass Drehzahlen erreicht werden, welche im Bereich des Drehzahlbegrenzers des Verbrennungsmotors liegen.

Gemäß einer nächsten Weiterbildung der Erfindung kann vorgesehen sein, dass zu Beginn der zweiten Phase geprüft wird, ob das Motormoment $M_{Mot}$ kleiner als das Fahrerwunschmoment $M_{FW}$ ist. Wenn dieser Fall vorliegt kann das Motorsollmoment $M_{Mot\_soll}$ erhöht werden, bis das Fahrerwunschmoment $M_{FW}$ erreicht ist. Dann können die jeweiligen Kupplungsmomente M_Kupp1 und M_Kupp2 an den Kupplungen des Anfangsganges und des Zielganges bestimmt werden. Danach wird die Überschneidungsschaltung beendet.

Das hier vorgestellte Schaltverfahren kann insbesondere bei unterbrechungsfreien Schaltgetrieben (USG), wie z. B. Doppelkupplungsgetrieben bzw. Parallelschaltgetrieben eingesetzt werden.

Die der Erfindung zugrundeliegende Aufgabe kann zum anderen durch ein Doppelkupplungsgetriebe für ein Fahrzeug, insbesondere zum Durchführen des vorgeschlagenen Verfahrens, gelöst werden. Das erfindungsgemäße Doppelkupplungsgetriebe kann zumindest eine Einrichtung zum Erkennen eines falsch vorgewählten Zielganges aufweisen, mit der auch das Motormoment $M_{Mot}$ derart verändert wird, dass das Abtriebsmoment $M_{Abtrieb}$ reduziert wird, wenn der korrekte Zielgang eingelegt wird.

Weitere Vorteile und vorteilhafte Ausgestaltungen ergeben sich aus den Unteransprüchen und den nachfolgend beschriebenen Zeichnungen.
Es zeigen:

Figur 1     Diagramme mit Momenten- und Drehzahlverläufen bei einer Zug-Hochschaltung anhand des erfindungsgemäßen Verfahrens;

Figur 2     ein Flussdiagramm einer ersten Phase des erfindungsgemäßen Verfahrens; und

Figur 3     ein Flussdiagramm einer zweite Phase des erfindungsgemäßen Verfahrens.

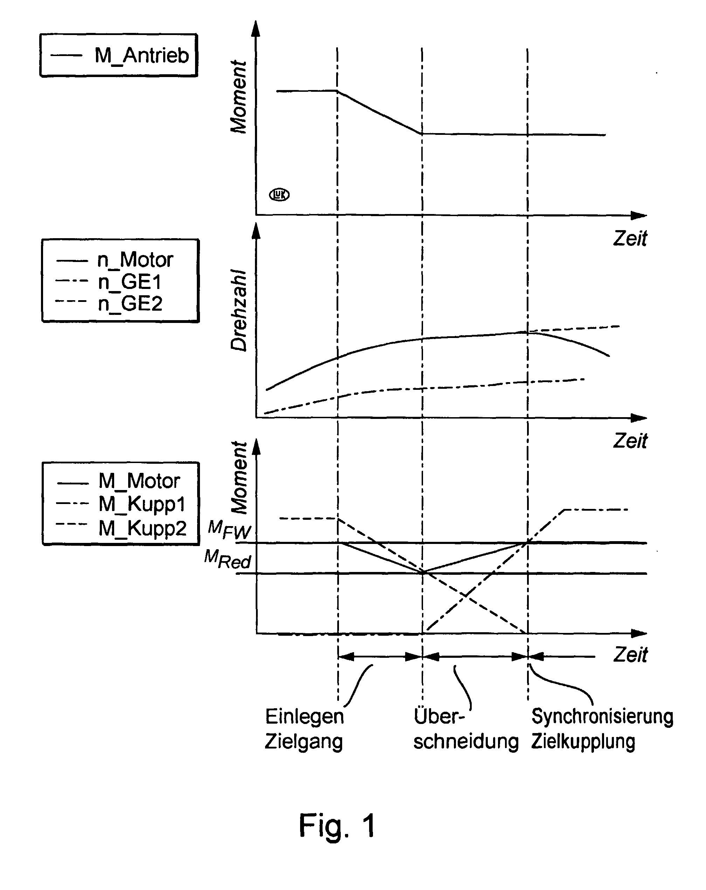

In Figur 1 ist in dem oberen Diagramm der Verlauf des Abtriebsmoments $M_{Abtrieb}$ während einer Zug-Hochschaltung dargestellt. In dem mittleren Diagramm sind die Verläufe der Motordrehzahl, der Drehzahl n_GE1 der dem Anfangsgang zugeordneten Getriebeeingangswelle und der Drehzahl n_GE2 der dem Zielgang zugeordneten Getriebeeingangswelle gezeigt. In dem unteren Diagramm sind die Verläufe des Motormoments $M_{Mot}$, des Kupplungsmoments M_Kupp1 an der dem Anfangsgang zugeordneten Kupplung und des Kupplungsmoments M_Kupp2 an der dem Zielgang zugeordneten Kupplung dargestellt. Die Zug-Hochschaltung ist dabei in eine erste Phase (Einlegen des Zielganges) und in eine zweite Phase (Überschneidung) unterteilt.

Bei dem erfindungsgemäßen Verfahren erfolgt die Absenkung des Abtriebsmoments $M_{Abtrieb}$ im Gegensatz zu sonst üblichen Schaltstrategien während der ersten Phase auf das Zielgangniveau. Dies bedeutet, dass die Synchronisierung der Motordrehzahl auf den Zielgang später als bei einer Schaltung mit richtig vorgewähltem Zielgang erfolgt. Wenn das Einlegen des Zielganges länger als das Herunterfahren des Motors $M_{Mot}$ auf das reduzierte Motormoment $M_{Red}$ dauert, kann das Zielmoment $M_{Red}$ so lange gehalten werden, bis der Zielgang eingelegt ist. Wenn die Phase kürzer ist, kann direkt vor dem Erreichen von $M_{Red}$ in die zweite Phase übergegangen werden. In diesem Fall kann allerdings durch die maximale Verfahrgeschwindigkeit der Kupplungen eine Beschränkung vorliegen.

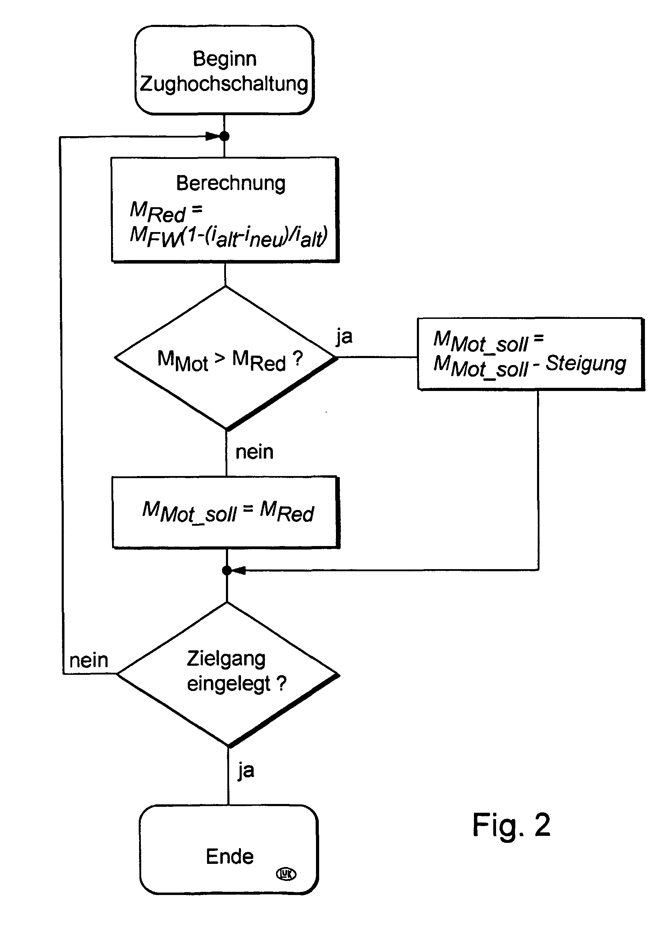

In Figur 2 ist ein Flussdiagramm der ersten Phase dargestellt. Zu Beginn der ersten Phase wird bei der Erkennung eines falsch vorgewählten Zielganges das maximal zu reduzierende Motormoment $M_{Red}$ bestimmt. Dann wird geprüft, ob das Motormoment $M_{Mot}$ größer als das maximal zu reduzierende Motormoment $M_{Red}$ ist. Wenn dies der Fall ist, kann das Motormoment $M_{Mot}$ linear auf ein reduziertes Motormoment $M_{Red}$ verringert werden, bis der Zielgang eingelegt ist. Wenn das reduzierte Motormoment $M_{Red}$ erreicht ist, wird abgewartet bis der Zielgang eingelegt ist. Sollten mehrere Schritte erforderlich sein, um das reduzierte Motormoment $M_{Red}$ zu erreichen, wird die vorbeschriebene Prozedur wiederholt. Nach dem Einlegen des Zielganges ist die erste Phase beendet.

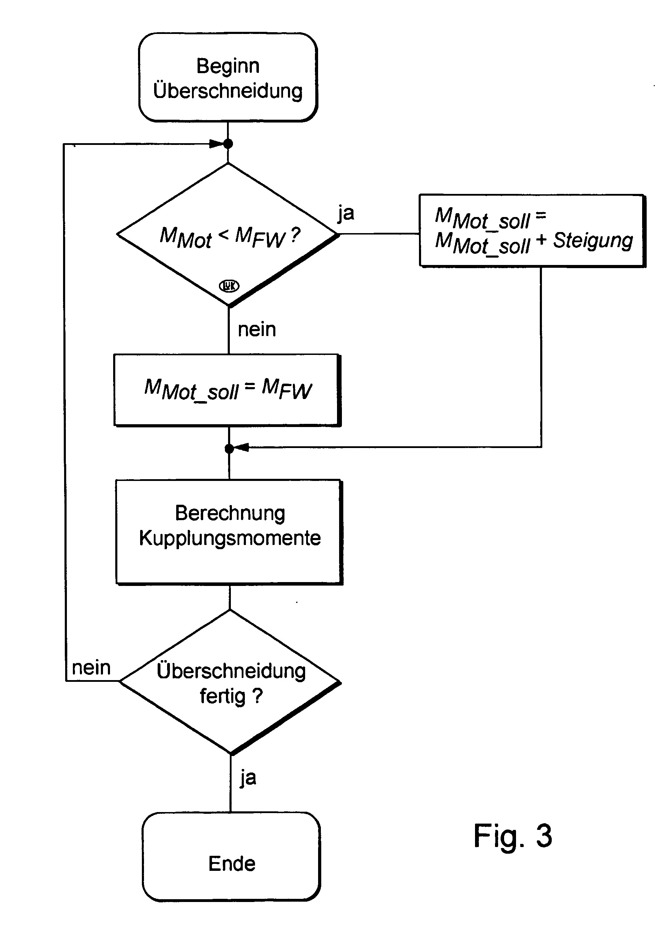

In Figur 3 ist ein Flussdiagramm der zweiten Phase dargestellt. Zu Beginn der zweiten Phase wird geprüft, ob das Motormoment $M_{Mot}$ kleiner als das Fahrerwunschmoment $M_{Mot}$ ist. Wenn ja wird das Motormoment $M_{Mot}$ linear erhöht, bis das Fahrerwunschmoment $M_{Mot}$ vorliegt. Danach werden die jeweiligen Kupplungsmomente M_Kupp1 und M_Kupp2 berechnet. Dies kann wiederholt werden bis die Überschneidungsschaltung beendet ist.

**Patentansprüche**

1. Verfahren zum Durchführen einer Hochschaltung von einem Anfangsgang in einen Zielgang bei einem Doppelkupplungsgetriebe eines Fahrzeuges, **dadurch gekennzeichnet, dass** das Motormoment ($M_{Mot}$) des Fahrzeuges bei der Erkennung eines falsch vorgewählten Ziel ganges derart verändert wird, dass das Abtriebsmoment ($M_{Abtrieb}$) reduziert wird, wenn der korrekte Zielgang eingelegt wird.

2. Verfahren nach Anspruch 1, **dadurch gekennzeichnet, dass** das Motormoment ($M_{Motor}$) zu Beginn einer Zug-Hochschaltung verringert wird, bis der Zielgang eingelegt wird und dass das Motormoment ($M_{Motor}$) danach auf ein Fahrerwunschmoment ($M_{FW}$) erhöht wird.

3. Verfahren nach Anspruch 1 oder 2, **dadurch gekennzeichnet, dass** das Motormoment ($M_{Motor}$) maximal auf ein reduziertes Motormoment ($M_{Red}$) verringert wird.

4. Verfahren nach Anspruch 3, **dadurch gekennzeichnet, dass** das reduzierte Motormoment ($M_{Red}$) nach folgender Gleichung bestimmt wird:

$$M_{Red} = M_{FW}\left(1 - \frac{i_{alt} - i_{neu}}{i_{alt}}\right)$$

$M_{FW}$ =     Fahrerwunschmoment;
$i_{alt}$ =     Übersetzung des Anfangsganges;
$i_{neu}$ =     Übersetzung des Zielganges.

5. Verfahren nach einem der vorangehenden Ansprüche, **dadurch gekennzeichnet, dass** in einer ersten Phase bei der Erkennung eines falsch vorgewählten Zielganges ein maximal zu reduzierendes Motormoment ($M_{Red}$) bestimmt wird, dass, wenn das Motormoment ($M_{Mot}$) größer als das maximal zu reduzierende Motormoment ($M_{Red}$) ist, das Motorsollmoment ($M_{Mot\_soll}$) auf das reduzierte Motormoment ($M_{Red}$) verringert wird, bis der Zielgang eingelegt wird, dass, wenn das Motormoment ($M_{Mot}$) dem maximal zu reduzierenden Motormoment ($M_{Red}$) entspricht, gewartet wird, bis der Zielgang eingelegt ist, wobei die erste Phase durch das Einlegen des Zielganges beendet wird und dass in einer zweiten Phase eine Überschneidungdurchgeführt wird, wobei das Motormoment ($M_{Mot}$) auf ein Fahrerwunschmoment ($M_{FW}$) erhöht wird.

6. Verfahren nach Anspruch 5, **dadurch gekennzeichnet, dass** zu Beginn der zweiten Phase geprüft wird, ob das Motormoment ($M_{Mot}$) kleiner als das Fahrerwunschmoment ($M_{FW}$) ist, wenn ja wird das Motorsollmoment ($M_{Mot\_soll}$) erhöht, bis das Fahrerwunschmoment ($M_{FW}$) erreicht wird, und dass danach die jeweiligen Kupplungsmomente (M_Kupp1, M_Kupp2) an den Kupplungen bestimmt werden, wobei danach die zweite Phase beendet wird.

7. Doppelkupplungsgetriebe für ein Fahrzeug, wobei das Verfahren nach einem der Ansprüche 1 bis 6 durchgeführt wird, **dadurch gekennzeichnet, dass** zumindest eine Einrichtung zum Erkennen eines falsch vorgewählten Zielganges und zum Verändern des Motormoments ($M_{Mot}$) vorgesehen ist.

## Claims

1. Method for performing and upshift from an initial gear to a target gear with a twin clutch transmission of a vehicle, **characterized in that** when an erroneously preselected target gear is recognized the engine torque ($M_{eng}$) of the vehicle is changed so that the take-off torque ($M_{take-off}$) is lessened when the correct target gear is engaged.

2. The method as in Claim 1, **characterized in that** the engine torque ($M_{engine}$) is reduced at the beginning of a drive upshift until the target gear is engaged, and **in that** the engine torque ($M_{engine}$) is then increased to a driver's desired torque ($M_{DD}$).

3. The method as in Claim 1 or 2, **characterized in that** the engine torque ($M_{engine}$) is reduced maximally to a reduced engine torque ($M_{red}$).

4. The method as in Claim 3, **characterized in that** the reduced engine torque ($M_{red}$) is determined according to the following equation:

$$M_{red} = M_{DD}\left(1 - \frac{i_{old} - i_{new}}{i_{old}}\right)$$

$M_{DD}$ = driver's desired torque;
$i_{old}$ = transmission ratio of the initial gear;
$i_{new}$ = transmission ratio of the target gear.

5. The method as in one of the preceding claims, **characterized in that** in a first phase, when an erroneously preselected target gear is recognized, a maximum reduction of engine torque ($M_{red}$) is determined; **in that** if the engine torque ($M_{eng}$) is greater than the maximum allowable reduction of engine torque ($M_{red}$), the target engine torque ($M_{eng\_target}$) is lessened to the reduced engine torque ($M_{red}$) until the target gear is engaged; **in that** if the engine torque ($M_{eng}$) corresponds to the maximum allowable reduction of engine torque ($M_{red}$), the system waits until the target gear is engaged, the first phase being ended by engaging the target gear; and **in that** in a second phase a crossover is performed in which the engine torque ($M_{eng}$) is increased to a driver's desired torque ($M_{DD}$).

6. The method as in Claim 5, **characterized in that** at the beginning of the second phase a check is performed to determine whether the engine torque ($M_{eng}$) is lower than the driver's desired torque ($M_{DD}$); if so, the target engine torque ($M_{eng\_target}$) is increased until the driver's desired torque ($M_{DD}$) is reached; and **in that** the respective clutch torques (M_Kupp1, M_Kupp2) are determined at the clutches, after which the second phase is ended.

7. Twin clutch transmission for a vehicle, the method being performed according to one of Claims 1 through 6, **characterized in that** at leased one device is provided for recognizing an incorrectly preselected target gear and for changing the engine torque ($M_{eng}$).

## Revendications

1. Procédé permettant le passage d'un rapport de départ à un rapport d'arrivée sur une boîte de vitesse à double embrayage d'un véhicule, **caractérisé par le fait que** le couple moteur ($C_{mot}$) du véhicule, en cas de détection d'un rapport mal choisi, est modifié de telle sorte que le couple de sortie ($C_{sortie}$) est réduit lorsque le rapport correct est enclenché.

2. Procédé selon la revendication 1, **caractérisé par le fait que** le couple moteur ($C_{mot}$) est réduit au début du passage à un rapport supérieur en phase de traction jusqu'à ce que le rapport souhaité soit enclenché et que le couple moteur ($C_{mot}$) est par la suite augmenté jusqu'au couple souhaité par le conducteur ($C_{cond}$).

3. Procédé selon la revendication 1 ou 2, **caractérisé par le fait que** le couple moteur ($C_{mot}$) est réduit jusqu'à un couple moteur réduit maximal ($C_{red}$).

4. Procédé selon la revendication 3, **caractérisé par**

**le fait que** le couple moteur réduit (C_red) est déterminé selon l'équation suivante :

$$C_{red} = C_{cond}\left(1 - \frac{i_{anc} - i_{nouv}}{i_{anc}}\right)$$

$C_{cond}$ = couple souhaité par le conducteur
$I_{anc}$ = représente le rapport de départ
$I_{nouv}$ = représente le rapport d'arrivée

5. Procédé selon l'une quelconque des revendications précédentes, **caractérisé par le fait que**, durant une première phase de détection d'un rapport mal choisi, un couple moteur réduit maximal (C_red) est déterminé, de façon à ce que, lorsque le couple moteur (C_mot) est supérieur au couple moteur réduit maximal (C_red), le couple moteur de consigne (C_mot-cons) est réduit au couple moteur réduit (C_red) jusqu'à ce que le rapport choisi soit enclenché, de sorte que, si le couple moteur (C_mot) correspond au couple moteur réduit maximal (C_red), on attend que le rapport choisi soit enclenché, la première phase s'achevant par l'enclenchement du rapport choisi, et que, durant une seconde phase, un chevauchement a lieu, le couple moteur (C_mot) étant augmenté jusqu'au couple souhaité par le conducteur (C_cond).

6. Procédé selon la revendication 5, **caractérisé par le fait qu'**au début de la seconde phase, il est vérifié que le couple moteur (C_mot) est inférieur au couple souhaité par le conducteur (C_cond). Si c'est le cas, le couple moteur de consigne (C_mot-cons) est augmenté jusqu'à ce que le couple souhaité par le conducteur (C_cond) soit atteint, et qu'ensuite les couples d'embrayage (C_emb1, C_emb2) correspondants sont déterminés au niveau des embrayages, après quoi la seconde phase est achevée.

7. Boîte de vitesse à double embrayage pour un véhicule dont le procédé se déroule selon une quelconque des revendications 1 à 6, **caractérisée par le fait qu'**au moins un dispositif est prévu pour la détection d'un rapport mal choisi et pour la modification du couple moteur (C_mot).

Fig. 1

Beginn
Zughochschaltung

Berechnung
$M_{Red} =$
$M_{FW}(1-(i_{alt}-i_{neu})/i_{alt})$

$M_{Mot} > M_{Red}$ ?

ja

$M_{Mot\_soll} =$
$M_{Mot\_soll}$ - Steigung

nein

$M_{Mot\_soll} = M_{Red}$

Zielgang
eingelegt ?

nein

ja

Ende

Fig. 2

**Fig. 3**

Flussdiagramm:

Beginn Überschneidung

$M_{Mot} < M_{FW}$ ?

ja → $M_{Mot\_soll} = M_{Mot\_soll} + Steigung$

nein

$M_{Mot\_soll} = M_{FW}$

Berechnung Kupplungsmomente

Überschneidung fertig ?

nein

ja

Ende